# EUROPEAN PATENT APPLICATION

(11) **EP 4 628 764 A1**
(43) Date of publication of application: **08.10.2025**
(21) Application number: 23896260.9
(22) Date of filing: 08.10.2023
(51) Int. Cl.: F16K 1/02, F16K 1/36, F16K 1/32

(54) **CONTROL VALVE**

(30) Priority: 30.11.2022 CN 202223205570 U
(71) Applicant: BYD Company Limited, Shenzhen, Guangdong 518118 (CN)
(72) Inventor: TAN, Chaozhi, Shenzhen, Guangdong 518118 (CN); LU, Yinbo, Shenzhen, Guangdong 518118 (CN)
(74) Representative: Mathys & Squire
(86) International application number: PCT/CN2023/123438
(87) International publication number: WO 2024/114104

(57) **Abstract**

Provided is a control valve (100), including a housing (110), a valve core (120), a valve needle (130), a screw assembly (140), an elastic assembly (150), and a drive assembly. The housing (110) defines an accommodation space (111). The valve core is fastened in the accommodation space. The screw assembly is rotatably connected to the valve core. The screw assembly includes a screw (141) and a stopper member (143). A screw cavity is disposed in the screw. A fitting part of the valve needle is movably disposed in the screw cavity (14131). The elastic assembly disposed between the screw assembly and the valve needle implements an elastic fit between the screw assembly and the valve needle, and the elastic assembly includes an elastic member and a gasket disposed between the elastic member and the screw assembly. When the drive assembly drives the screw to rotate, the screw moves in a first direction and drives the valve needle to get close to or away from an outlet (115), so that the elastic assembly can reduce rotation of the valve needle with the screw.

## Description

### CROSS REFERENCE TO RELATED APPLICATIONS

This application claims priority to Chinese Patent Application No. 202223205570.3, filed on November 30, 2022 by BYD Co., Ltd. and entitled "CONTROL VALVE".

### TECHNICAL FIELD

This application relates to the field of fluid control valves, and in particular, to a control valve.

### BACKGROUND

Control valves are mainly applied to refrigeration systems. An electromagnetic coil controls the rotation of a rotor. A screw is in rotating fit with a valve core, so that a valve needle gets close to or away from a valve port. Therefore, the flow area of the valve port is adjusted so as to regulate refrigerant flow. When the valve needle closes the valve port, the screw needs to be rotated to ensure a tight seal. In this case, the valve needle is prone to rotate relative to the valve port causing abrasion, thereby shortening service life.

### SUMMARY

This application is intended to solve one of technical problems in the prior art at least to some extent.

According to a first aspect of this application, provided is a control valve, including a housing, an accommodation space being disposed in the housing, and an inlet and an outlet that communicate with the accommodation space and are disposed in the housing; a valve core, where the valve core is fixedly disposed in the accommodation space, a through hole penetrating in a first direction being disposed in the valve core, and at least a part of an inner wall of the through hole being provided with an internal thread; a valve needle, where the valve needle is movably disposed in the accommodation space, and the valve needle is provided with a fitting part and an adjustment part; a screw assembly, where the screw assembly includes a screw and a stopper member, the screw including a rod part and a cylinder part that are distributed in the first direction, the rod part being provided with an external thread that fits with the internal thread, the cylinder part being disposed at one end of the rod part close to the outlet, a screw cavity being disposed in the cylinder part, the fitting part being movably disposed in the screw cavity, the adjustment part being located outside the screw cavity, and at least a part of the stopper member being disposed in the screw cavity so as to limit that the fitting part is disengaged from the screw cavity in a direction away from the rod part, so that the valve needle is able to rotate relative to the cylinder part and move along the first direction; an elastic assembly, configured to implement an elastic fit in the first direction between the screw assembly and the valve needle, where the elastic assembly includes an elastic member and a gasket, the elastic member having a first end and a second end that are back to back, the first end of the elastic member abutting against the valve needle in the direction away from the rod part, the gasket being disposed between the second end of the elastic member and the screw, and one side of the gasket abutting against the screw is a cambered surface; and a drive assembly, configured to drive the screw to rotate relative to the valve core, so that the screw moves in the first direction, and drives the valve needle to get close to or away from the outlet so as to adjust fluid flow of the outlet by using the adjustment part.

The screw rotates relative to the valve core, and the screw moves in the first direction with a fit between the internal thread and the external thread. When the screw moves downward, the screw pushes the valve needle through the elastic member to move downward. When the screw moves upward, the screw drives the valve needle through the stopper member to move upward. Therefore, the valve needle is driven to get close to or away from the outlet, so as to adjust fluid flow of the outlet through the adjustment part. One side of the gasket abutting against the screw has a cambered surface, thereby reducing a contact area between the elastic assembly and the screw, and reducing a rotational friction force between the elastic assembly and the screw. When the outlet needs to be closed, after the valve needle is controlled to move to a closed position, in order to ensure a sealing effect, the screw still needs to be controlled to continue to move downward by a distance. In this process, the valve needle abuts against an edge of the outlet. The screw rotates and compresses downward the elastic member. The fitting part and a bottom end of the cylinder part are spaced apart. Moreover, a cambered surface structure of the gasket can reduce the rotational friction force between the elastic assembly and the screw, thereby effectively reducing abrasion caused by rotation of the valve needle relative to the outlet, and prolonging a service life of the control valve.

The additional aspects and advantages of this application will be described partially in the following description, and will be clear from the following description, or learned through the practice of this application.

### BRIEF DESCRIPTION OF DRAWINGS

FIG. 1 is a front view of a control valve according to an embodiment;
FIG. 2 is a cross-sectional view of the control valve shown in FIG. 1 along C-C; and
FIG. 3 is a partially enlarged view at a position of D in FIG. 2.

### DESCRIPTION OF EMBODIMENTS

Embodiments of this application are described in detail below, and examples of the embodiments are illustrated in the drawings, where same or similar reference numerals refer to the same or similar elements or elements with the same or similar function throughout. The embodiments described below by reference to the drawings are exemplary and aim to explain this application and are not to be construed as limiting this application.

In description of this application, it should be understood that the indicative orientation or positional relationship indicated by terms "center", "longitudinal", "transverse", "length", "width", "upper", "lower", "front", "back" "left", "right", "vertical", "horizontal", "top", "bottom", "inside", "outside" and "circumferential" is based on the orientation or positional relationship shown in the drawings only for convenience of description of this application and simplification of description rather than indicating or implying that the apparatus or element referred to must have a particular orientation, be constructed and operate in a particular orientation, and thus is not to be construed as limiting this application.

In this application, terms "install" "link", "connect", "fix", etc. should be understood in a broad sense unless otherwise definitely stipulated or limited. For example, a connection may be a fixed connection, a detachable connection, or an integrated connection; may be a mechanical connection or an electrical connection; and may be a direct connection, an indirect connection through an intermediate medium, or a connection inside two elements or interaction between two elements. A person of ordinary skill in the art can understand specific meanings of these terms in this application based on specific situations.

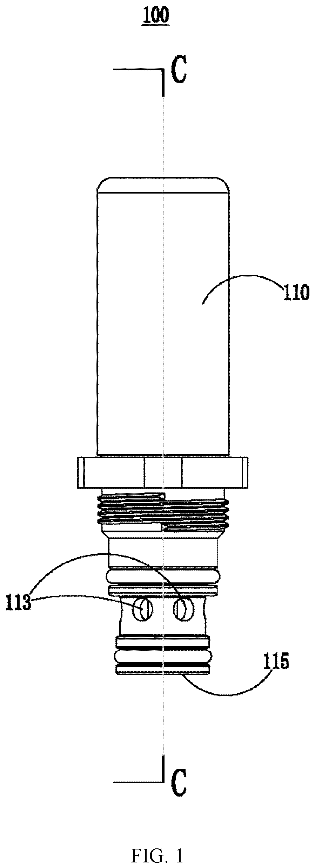

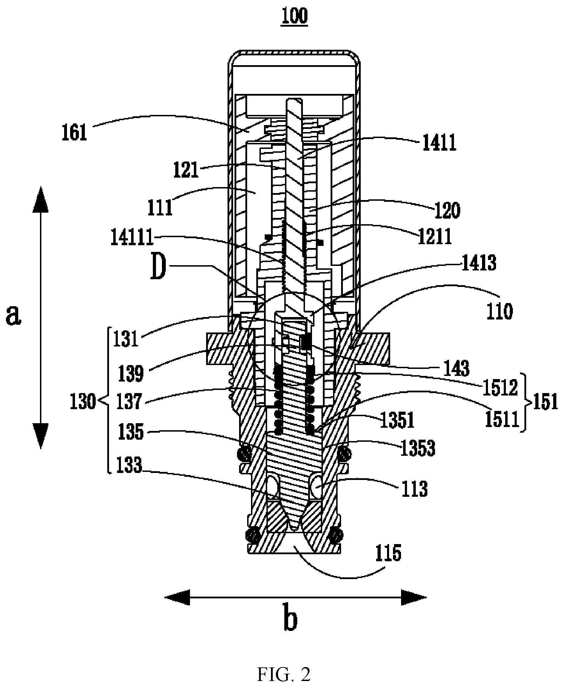

As shown in FIG. 1 and FIG. 2, a control valve 100 according to this application includes a housing 110, a valve core 120, a valve needle 130, a screw assembly 140, an elastic assembly 150, and a drive assembly.

An accommodation space 111 is disposed in the housing 110. An inlet 113 and an outlet 115 that communicate with the accommodation space 111 are disposed in the housing 110.

The valve core 120 is fixedly disposed in the accommodation space 111. A through hole 121 extending in a first direction is disposed in the valve core 120. At least a part of an inner wall of the through hole 121 is provided with an internal thread 1211.

The valve needle 130 is movably disposed in the accommodation space 111. The valve needle 130 is provided with a fitting part 131 and an adjustment part 133.

The screw assembly 140 includes a screw 141 and a stopper member 143. The screw 141 includes a rod part 1411 and a cylinder part 1413 that are distributed in the first direction. The rod part 1411 is provided with an external thread 14111 that fits with the internal thread 1211. The cylinder part 1413 is disposed at one end of the rod part 1411 close to the outlet 115, that is, a lower end as shown in the figure. A screw cavity 14131 is disposed in the cylinder part 1413. The fitting part 131 is movably disposed in the screw cavity 14131. The adjustment part 133 is located outside the screw cavity 14131. At least a part of the stopper member 143 is disposed in the screw cavity 14131 so as to limit that the fitting part 131 is disengaged from the screw cavity 14131 in a direction away from the rod part 1411, so that the valve needle 130 is able to rotate relative to the cylinder part 1413 and move in the first direction a.

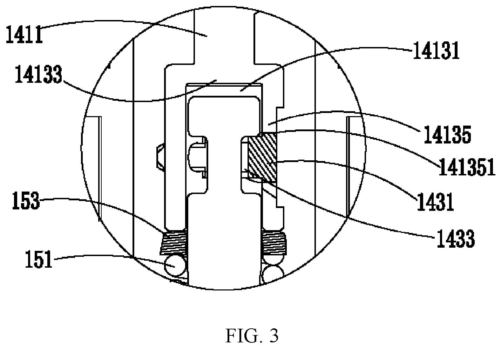

In addition, referring to FIG. 3, the elastic assembly 150 is configured to implement an elastic fit between the screw assembly 140 and the valve needle 130 in the first direction a. The elastic assembly 150 includes an elastic member 151 and a gasket 153. The elastic member 151 has a first end 1511 and a second end 1512 that are back to back. The first end 1511 of the elastic member 151 abuts against the valve needle 130 in the direction away from the rod part 1411. The gasket 153 is disposed between the second end 1512 of the elastic member 151 and the screw 141. That is, the elastic member 151 is in a compressed state. The first end 1511 of the elastic member 151 exerts a downward acting force on the valve needle 130, and the second end 1512 of the elastic member 151 exerts an upward acting force on the screw 141 through the gasket 153, so that the valve needle 130 tends to move downward relative to the screw 141. However, due to a limitation of the stopper member 143 on downward movement of the fitting part 131, the fitting part 131 abuts against the lower end of the cylinder part 1413.

The drive assembly is configured to drive the screw 141 to rotate relative to the valve core 120. In the shown embodiment, the drive assembly includes a magnetic rotor 161 and an electromagnetic coil (not shown). The magnetic rotor 161 is disposed in the accommodation space 111, and is connected to one end of the rod part 1411 away from the cylinder part 1413, so that when the electromagnetic coil is energized, the magnetic rotor 161 drives the screw 141 to rotate, and based on different current directions input by the electromagnetic coil, the magnetic rotor 161 rotates correspondingly in different directions. It will be understood that the drive assembly is not limited in this application, provided that the screw can be driven to rotate relative to the valve core.

The screw 141 rotates relative to the valve core 120, and with a fit between the internal thread 1211 and the external thread 14111, the screw 141 moves in the first direction a, that is, moves upward or downward as shown in the figure. When the screw 141 moves downward, the screw 141 pushes the valve needle 130 through the elastic member 151 to move downward. When the screw 141 moves upward, the screw 141 drives the valve needle 130 through the stopper member 143 to move upward. Therefore, the valve needle 130 is driven to get close to or away from the outlet 115, so as to adjust fluid flow of the outlet 115 through the adjustment part 133.

In this application, one side of the gasket 153 abutting against the screw 141 is a cambered surface, thereby reducing a contact area between the elastic assembly 150 and the screw 141, and reducing a rotational friction force between the elastic assembly 150 and the screw 141. When the outlet needs to be closed, after the valve needle is controlled to move to a closed position, in order to ensure a sealing effect, the screw 141 still needs to be controlled to continue to move downward by a distance. In this process, the valve needle 130 abuts against an inner wall of the outlet 115. The screw 141 rotates and compresses downward the elastic member 150. The fitting part 131 and a bottom end of the cylinder part 1413 are spaced apart. Moreover, a cambered surface structure of the gasket 153 can reduce the rotational friction force between the elastic assembly 150 and the screw 141, thereby effectively reducing abrasion caused by rotation of the valve needle 130 relative to the outlet 115, and prolonging the service life of the control valve 100.

In this embodiment, the elastic member 150 is disposed outside the screw cavity 14131 and located on one side of the cylinder part 1413 away from the rod part 1411. The gasket 153 is disposed between one end of the cylinder part 1413 away from the rod part 1411 and the elastic member 150. The first end 1511 of the elastic member 150 abuts against the valve needle in the first direction a, so that the elastic member 150 is compressed between the screw 141 and the valve needle 130 to implement an elastic fit between the screw assembly 140 and the valve needle 130 in the first direction a. It will be understood that "the elastic member 150 is disposed outside the screw cavity 14131" is merely used as an implementation of this application. In another embodiment, the elastic member may alternatively be disposed inside the screw cavity. The elastic member is disposed between a top end of the fitting part of the valve needle and a bottom wall of the cylinder part. The first end of the elastic member abuts against the fitting part of the valve needle downward in the first direction a, and the second end of the elastic member abuts against the bottom wall of the cylinder part upward in the first direction a (that is, a wall of the cylinder part 1413 close to the rod part 1411). An elastic fit between the screw assembly and the valve needle in the first direction a may also be implemented. This application sets no limitation on whether the elastic member is located in the screw cavity, provided that "an elastic fit between the screw assembly and the valve needle in the first direction a" can be implemented.

In this embodiment, the elastic member 150 is a spring. The spring is located outside the screw cavity 14131 and is sleeved on the valve needle 130. The gasket 153 is annular and is also sleeved on the valve needle 130. The valve needle 130 is provided with a boss 135. The boss is located between the fitting part 131 and the adjustment part 133. The boss 135 protrudes in a direction perpendicular to the first direction a from a side wall of the valve needle 130, thereby forming a step surface 1351 for the spring to abut against. The first end 1511 of the elastic member 151 abuts against the step surface, and the second end 1512 of the elastic member 151 abuts against the lower end of the cylinder part 1413 through the gasket 153, so as to implement an elastic fit between the screw assembly 140 and the valve needle 130 in the first direction a. "The elastic member 150 is a spring sleeved on the valve needle 130, and the gasket 153 is an annular member sleeved on the valve needle 130", which facilitates positioning of the elastic assembly 150 and is beneficial to implementing an elastic effect. However, this is only used as an implementation of this application. This is not limited in this application, provided that the elastic assembly can implement an elastic fit between the screw assembly and the valve needle in the first direction a.

In this embodiment, the valve needle 130 is provided with the boss 135 between the fitting part 131 and the adjustment part 133, and abuts against the first end 1511 of the elastic member 151 through the boss 135. The boss 135 is provided with a guide surface 1353 that fits with the housing 110. The guide surface 1353 is in guide fit with an inner wall surface of the housing 110 in the first direction a, so that the boss 135 plays a role in abutting against the elastic member 151, and also accurately locates the valve needle 130 and the housing 110, thereby facilitating alignment of the outlet 115, effectively ensuring that the valve needle 130 fits with the outlet 115, and improving fluid flow control accuracy of the control valve 100. It should be understood that "the boss 135 is disposed on the valve needle 130 to abut against the first end 1511 of the elastic member 151" is only used as an implementation of this application. In another embodiment, a boss may not be disposed. The first end of the elastic member is fastened to the valve needle in a welding manner or the like. This application sets no limitation on how the elastic member to abut against the valve needle.

In this embodiment, the elastic member 150 is a spring. The spring is located outside the screw cavity 14131 and is sleeved on the valve needle 130. The gasket 153 is annular and is also sleeved on the valve needle 130. The valve needle 130 is provided with a boss 135. The boss is located between the fitting part 131 and the adjustment part 133. The boss 135 protrudes in a direction perpendicular to the first direction a from a side wall of the valve needle 130, thereby forming a step surface 1351 for the spring to abut against. The first end 1511 of the elastic member 151 abuts against the step surface, and the second end 1512 of the elastic member 151 abuts against the lower end of the cylinder part 1413 through the gasket 153, so as to implement an elastic fit between the screw assembly 140 and the valve needle 130 in the first direction a. The valve needle 130 is provided with a guide part 137. The guide part 137 is disposed between the fitting part 131 and the boss 135. A radial dimension of the guide part 137 is adapted to that of the spring. The spring is sleeved on the guide part 137. The spring is in guide fit with the guide part 137 in the first direction a, so that the spring keeps coaxial with the guide part 137 without deviation in a movement process, thereby improving elastic fit accuracy of the spring with the screw 141 and the valve needle 130.

The guide part 137 and the cylinder part 1413 are both cylindrical. The guide part 137 is adapted with the cylinder part 1413. At least a part of the guide part 137 is located in the screw cavity 14131, so that the guide part 137 is in guide fit with the cylinder part 1413 in the first direction a, and the guide part 137 is able to rotate relative to the cylinder part 1413.

In this embodiment, one side of the gasket 153 in contact with the elastic member 151 is a plane.

In this embodiment, the gasket 153 is a polyformaldehyde resin plastic injection-molded part, which has self-lubrication performance, thereby reducing a rotational friction force between the screw 141 and the elastic assembly 150, reducing abrasion caused by rotation of the valve needle 130 relative to the outlet 115, and prolonging the service life of the control valve 100.

In this embodiment, the cylinder part 1413 includes a bottom wall 14133 and a side wall 14135. The bottom wall 14133 is connected to the rod part 1411. The side wall 14135 extends in the first direction a from the bottom wall 14133. At one end of the cylinder part 1413 away from the bottom wall 14133, an opening (not marked) is formed in the side wall 14135, and the valve needle 130 passes through the opening. The stopper member 143 passes through the side wall 14135 in a second direction b. The second direction b is orthogonal to the first direction a so that at least a part of the stopper member 143 is located in the screw cavity 14131. The stopper member 143 blocks downward movement of the fitting part 131 in the first direction a. The fitting part 131 is movably disposed between the stopper member 143 and the bottom wall 14133. The valve needle 130 is provided with a connecting part 139. The connecting part 139 is located between the fitting part 131 and the adjustment part 133. As shown in FIG. 2, the fitting part 131, the connecting part 139, the guide part 137, the boss 135, and the adjustment part 133 are arranged in the first direction a. The connecting part 139, the guide part 137, the boss 135, and the adjustment part 133 are connected sequentially from top to bottom. A radial dimension of the connecting part 139 is smaller than that of the fitting part 131, and the connecting part 139 may pass through between the stopper member 143 and the side wall 14135, so that the fitting part 131 and the adjustment part 133 move integrally. When the screw 141 drives the valve needle 130 to move upward, the stopper member 143 abuts against the fitting part 131. After the valve needle 130 abuts against the edge of the outlet 115, the screw 141 continues to move downward, so that the fitting part 131 is separated from the stopper member 143.

It should be understood that the stopper member 143 passes through the side wall 14135 in the second direction b, so that at least a part of the stopper member 143 is located in the screw cavity 14131. The stopper member 143 blocks downward movement of the fitting part 131 in the first direction a, thereby facilitating installation of the stopper member 143. However, this application sets no limitation thereto, provided that the fitting part 131 can be blocked from disengaging from the stopper member of the screw cavity 14131 downward. For example, a screw cover is disposed at one end of the cylinder part 1413 away from the bottom wall 14133 so as to partially cover the opening and block the fitting part 131 from disengaging from the screw cavity 14131 downward.

In this embodiment, an installation port 141351 is disposed in the side wall 14135. The stopper member 143 includes an installation part 1431 and two stopper parts 1433. The installation part 1431 and the two stopper parts 1433 form a U-shaped structure. The installation part 1431 fits with the installation port 141351 for fastening. One end of the stopper part 1433 is connected to the installation part 1431, and the other end of the stopper part 1433 extends into the screw cavity 14131 to prevent the fitting part 131 from disengaging from the screw cavity 14131. The connecting part 139 of the valve needle 130 passes through between the two stopper parts 1433. A spacing between the two stopper parts 1433 is adapted with a radial dimension of the connecting part 139, so that the connecting part 139 can move between the two stopper parts 1433, and the connecting part 139 can also be positioned.

It should be understood that the stopper member 143 includes two stopper parts 1433, which is merely used as an implementation of this application. A set quantity of the stopper parts 1433 is not limited in this application. For example, the stopper member 143 includes an installation part 1431 and one stopper part 1433. The installation part 1431 fits with the installation port 141351 for fastening. One end of the stopper part 1433 is connected to the installation part 1431, and the other end of the stopper part 1433 extends into the screw cavity 14131 to prevent the fitting part 131 from disengaging from the screw cavity 14131. Provided that the stopper member 143 includes at least one stopper part 1433, the fitting part 131 can be prevented from disengaging from the screw cavity 14131.

In this embodiment, the cylinder part 1413 and the fitting part 131 are both cylindrical. A side surface of the fitting part 131 is in guide fit with the side wall 14135 of the cylinder part 1413, so that the fitting part 131 is able to rotate along the side wall 14135 of the cylinder part 1413 and move in the first direction a. Through a guide fit between the fitting part 131 and the cylinder part 1413 in the first direction a, a guide fit between the guide part 137 and the cylinder part 1413 in the first direction a, and a guide fit between the boss 135 and the housing 110 in the first direction a, coaxiality of the screw 140, the valve needle 141, and the outlet 115 can be effectively ensured, and integral assembly accuracy of the control valve 100 is improved.

In conclusion, a control valve 100 is provided in this application. The control valve 100 includes a housing 110, a valve core 120, a valve needle 130, a screw assembly 140, an elastic assembly 150, and a drive assembly. The housing 110 defines an accommodation space 111. The valve core 130 is fastened in the accommodation space 111. The screw assembly 140 is rotatably connected to the valve core 120. The screw assembly 140 includes a screw 141 and a stopper member 143. A screw cavity 14131 is disposed in the screw 141. A fitting part 131 of the valve needle 130 is movably disposed in the screw cavity 14131. The elastic assembly 150 disposed between the screw assembly 140 and the valve needle 130 implements an elastic fit between the screw assembly 140 and the valve needle 130, and the elastic assembly 150 includes an elastic member 151 and a gasket 153 disposed between the elastic member 151 and the screw assembly 140. When the drive assembly drives the screw 141 to rotate, the screw 141 moves in a first direction a and drives the valve needle 130 to get close to or away from an outlet 115, so that the elastic member 150 can reduce rotation of the valve needle 130 with the screw 141.

In description of this specification, descriptions referring to the terms "one embodiment", "some embodiments", "examples", "specific examples" or "some examples" mean that specific features, structures, materials, or characteristics described in connection with this embodiment or example are included in at least one embodiment or example of this application. In this specification, schematic expression of the above terms does not necessarily refer to the same embodiment or example. Moreover, the described specific features, structures, materials, or characteristics can be combined in any one or more embodiments or examples appropriately. In addition, a person skilled in the art can integrate or combine different embodiments or examples and characteristics of different embodiments or examples described in this specification, provided that they do not conflict with each other.

Although the embodiments of this application have already been illustrated and described, it may be understood that the embodiments are exemplary but cannot be understood as limitation on this application. A person of ordinary skill in the art may change, modify, replace, or modify the embodiments within the scope of this application.

## Claims

1. A control valve, comprising:
a housing, wherein an accommodation space is disposed in the housing, and an inlet and an outlet that communicate with the accommodation space are disposed in the housing;
a valve core, wherein the valve core is fixedly disposed in the accommodation space, a through hole penetrating in a first direction is disposed in the valve core, and at least a part of an inner wall of the through hole is provided with an internal thread;
a valve needle, wherein the valve needle is movably disposed in the accommodation space, and the valve needle is provided with a fitting part and an adjustment part;
a screw assembly, wherein the screw assembly comprises a screw and a stopper member, the screw comprises a rod part and a cylinder part that are distributed in the first direction, the rod part is provided with an external thread that fits with the internal thread, the cylinder part is disposed at one end of the rod part close to the outlet, a screw cavity is disposed in the cylinder part, the fitting part is movably disposed in the screw cavity, the adjustment part is located outside the screw cavity, and at least a part of the stopper member is disposed in the screw cavity so as to limit that the fitting part is disengaged from the screw cavity in a direction away from the rod part, so that the valve needle is able to rotate relative to the cylinder part and move along the first direction;
an elastic assembly, configured to implement an elastic fit in the first direction between the screw assembly and the valve needle, wherein the elastic assembly comprises an elastic member and a gasket, the elastic member has a first end and a second end that are back to back, the first end of the elastic member abuts against the valve needle in the direction away from the rod part, the gasket is disposed between the second end of the elastic member and the screw, and one side of the gasket abutting against the screw is a cambered surface; and
a drive assembly, configured to drive the screw to rotate relative to the valve core, so that the screw moves in the first direction, and drives the valve needle to get close to or away from the outlet so as to adjust fluid flow of the outlet by using the adjustment part.

2. The control valve according to claim 1, wherein the elastic member is disposed on one side of the cylinder part away from the rod part, and the gasket is disposed between one end of the cylinder part away from the rod part and the elastic member.

3. The control valve according to claim 2, wherein the elastic member is a spring sleeved on the valve needle, the valve needle is provided with a boss, and the second end of the elastic member abuts against the boss in the first direction.

4. The control valve according to claim 3, wherein the boss is in guide fit with the housing in the first direction.

5. The control valve according to claim 3 or 4, wherein the valve needle is provided with a guide part, the guide part is disposed between the fitting part and the boss, the elastic member is sleeved on the guide part, and the elastic member is in guide fit with the guide part in the first direction.

6. The control valve according to claim 5, wherein the guide part and the cylinder part are both cylindrical, and at least a part of the guide part is located in the screw cavity and is in guide fit with the cylinder part in the first direction.

7. The control valve according to any one of claims 1 to 6, wherein the gasket is annular, and the gasket is sleeved on the valve needle.

8. The control valve according to any one of claims 1 to 7, wherein one side of the gasket in contact with the elastic member is a plane.

9. The control valve according to any one of claims 1 to 8, wherein the gasket is a polyformaldehyde resin plastic injection-molded part.

10. The control valve according to any one of claims 1 to 9, wherein the cylinder part comprises a bottom wall and a side wall, the bottom wall is connected to the rod part, the side wall extends in the first direction from the bottom wall, the stopper member passes through the side wall in a second direction, the second direction is orthogonal to the first direction so that at least a part of the stopper member is located in the screw cavity, and the fitting part is movably disposed between the stopper member and the bottom wall.

11. The control valve according to claim 10, wherein an installation port is disposed in the side wall, the stopper member comprises an installation part and at least one stopper part, the installation part fits with the installation port for fastening, one end of the stopper part is connected to the installation part, and the other end of the stopper part extends into the screw cavity to prevent the fitting part from disengaging from the screw cavity.

12. The control valve according to claim 10 or 11, wherein the cylinder part and the fitting part are both cylindrical, and a side surface of the fitting part is in guide fit with the side wall of the cylinder part, so that the fitting part is able to rotate along the side wall of the cylinder part and move in the first direction.
